# EUROPÄISCHE PATENTSCHRIFT

(11) **EP 2 055 192 B1**
(45) Veröffentlichungstag und Bekanntmachung des Hinweises auf die Patenterteilung: **23.10.2013**
(21) Anmeldenummer: 08168017.5
(22) Anmeldetag: 31.10.2008
(51) Int. Cl.: A23C 9/133, A23C 9/137, A23C 9/154, A23C 21/08

(54) **2 Phasen bildendes Getränk**
Dual-phase drink
Boisson formant 2 phases

(30) Priorität: 31.10.2007 EP 07119743
(43) Veröffentlichungstag der Anmeldung: 06.05.2009
(73) Patentinhaber: Döhler GmbH, 64295 Darmstadt (DE)
(72) Erfinder: Schenk, Janine, 64521 Groß-Gerau (DE); Heckemanns, Günter, 64295 Darmstadt (DE); Hechler, Thomas, 64295 Darmstadt (DE)
(74) Vertreter: von Kreisler Selting Werner

(56) Entgegenhaltungen:
- EP-A- 0 521 707
- EP-A- 1 415 548
- WO-A-03/003844
- WO-A-03/092393
- US-A- 3 647 476
- US-A- 4 919 960
- US-A1- 2003 157 230

## Beschreibung

Die vorliegende Erfindung betrifft ein Verfahren zur Herstellung eines Getränkes und das Getränk.

Getränke, die Mischungen von Milch, Milcherzeugnissen und Fruchtbestandteilen enthalten, sind vielfältig bekannt. Es besteht jedoch ein Bedarf an Variationen von Getränken, die die Aufmerksamkeit der Verbraucher auf sich ziehen.

EP 1 415 548 beschreibt ein Getränk, das zwei Phasen aufweist und durch Überschichtung von zwei Phasen erhalten wird. Wird das Getränk geschüttelt, ist das Vermischen irreversibel.

Aufgabe der vorliegenden Erfindung war es, ein Verfahren bereitzustellen, mit dem neuartige Getränke erhalten werden können.

Überraschenderweise kann die Aufgabe gelöst werden durch ein Verfahren zur Herstellung eines zweiphasigen Getränkes umfassend die Schritte
- Vermischen von Milch oder Milcherzeugnissen mit einem Fettgehalt von bis zu 1 Gew.-% mit Wasser, einem Verdickungsmittel und Zucker sowie gegebenenfalls Säuerungsmittel, Säureregulator
- Zugabe eines Fruchtgrundstoffs enthaltend Frucht sowie gegebenenfalls Hydrokolloide, Säuerungsmittel bzw. Säureregulatoren, Aroma, Farbstoffe,
wobei das Getränk einen pH-Wert im Bereich von 3,6 bis 4,0 aufweist, sich innerhalb von 24 Stunden bei 6°C in zwei Phasen auftrennt und sich nach Schütteln wieder in zwei Phasen trennt.

Erfindungsgemäß werden Milch oder Milcherzeugnisse mit einem relativ geringen Fettgehalt im Bereich von bis zu 1 Gew.-%, bevorzugt 0,1 bis 1 Gew.-% mit Wasser vermischt. Im Gesamtgetränk liegt der Milch- bzw. Milcherzeugnisanteil bevorzugt im Bereich von 20 bis 40 Gew.-%. Milcherzeugnisse sind Produkte auf Milchbasis wie beispielsweise Joghurt, Kefir, Buttermilchprodukte, etc.

Als Verdickungsmittel eignen sich beispielsweise Pektine, Kappacarrageene, Carboxymethylcellulose, Gelatine, Guarkernmehl, Carrageene, Stärke, Mischungen und weitere dem Fachmann bekannte Substanzen. Die eingesetzten Verdickungsmittel liegen bezogen auf das Endgetränk in einer Menge von 0,4 bis 0,8 Gew.-% vor.

Ein geeigneter Gehalt an Verdickungsmitteln im Endgetränk liegt sich 0,4 und 0,8 Gew.-%, geeignete Viskositäten zwischen etwa 10 und etwa 40 mPas (gemessen bei 20°C mit einer Scherrate 10 bis 100 l/s nach ISO 3219).

Die Menge an Zucker, die verwendet wird, liegt bevorzugt in einem Bereich von 3 bis 15% bezogen auf das Endgetränk. Als Zucker werden Saccharose, Fruchtsüße, Fructose, Dextrose oder Mischungen davon bevorzugt.

Im nächsten Schritt wird ein Fruchtgrundstoff hinzugegeben, der neben Frucht auch Zucker, Hydrokolloide, Säuerungsmittel bzw. Säureregulatoren, Farbstoffe und Aromastoffe enthalten kann.

Für die Herstellung des Fruchtgrundstoffes sind alle im Markt erhältlichen Fruchtrohstoffe geeignet. Der Fruchtgrundstoff kann 5 bis 100 Gew.-% Fruchtanteil aufweisen. Der Fruchtgrundstoff liegt bezogen auf das Endgetränk in einer Menge von 5 bis 40 Gew.-% vor. Das Getränk weist einen pH-Wert im Bereich von 3,6 bis 4,0 auf (gegebenenfalls nach Einstellung mit Säuren und Säureregulatoren) und trennt sich innerhalb weniger Stunden bei 6 bis 25°C in zwei Phasen auf.

Damit die Phasentrennung für den Konsumenten sichtbar wird, empfiehlt es sich einen Farbstoff zuzugeben, der sich unterschiedlich in den beiden Phasen löst und damit die Phasengrenze hervorhebt. Geeignete Farbstoffe sind beispielsweise Beta-Carotin (E160), färbende Frucht- und Pflanzenextrakte und Mischungen davon. Zusätzlich können weitere Hilfsstoffe verwendet werden, wie Säuerungsmittel bzw. Säureregulatoren, Aromen, Farbstoffe, Zucker und Wasser.

Gegenstand der Erfindung ist auch ein zweiphasiges Getränk erhältlich durch das erfindungsgemäße Verfahren. Das erfindungsgemäße Getränk zeigt bei Lagerungsbedingungen in der Kühltheke (etwa 6 bis 8°C) und unter Raumbedingungen (etwa 20 bis 25°C) eine Trennung, die innerhalb von 6 bis 24 Stunden abgeschlossen ist.

Vermischen und Trennen sind reversibel, d.h. nach Schütteln trennt sich die Mischung wieder in zwei Phasen. Schütteln ist beispielsweise ein 10maliges Umschwenken eines zu 90% gefüllten Behälters.

Die Erfindung wird durch die nachfolgenden Beispiele näher erläutert.

### Messverfahren

### Durchgeführte Untersuchungen mittels Rheometer

Die rheologischen Untersuchungen werden mittels Rheometer CVO 120HR NF der Firma Bohlin Instruments durchgeführt.

Zur Messung der unterschiedlichen Proben wurde ein koaxiales Zylindersystem, das aus einem Außen- und Innenzylinder besteht, verwendet. Im Rahmen der durchgeführten Bestimmungen wurde ein Innenzylinder mit dem Durchmesser 25 mm, auch C25 genannt, eingesetzt. Dieses Meßsystem ermöglicht die Messung von hochviskosen als auch von niedrigviskosen Proben, wie z.B. von Fertiggetränken. Außerdem werden die Messproben durch die große Berührungsfläche des Außenzylinders ideal temperiert.

### Aufbau des Rheometer

Das Rheometer der Firma Bohlin Instruments ist ein schubspannungsgesteuertes Messgerät, das über eine Druckluftlagerung mit kleinen Reibungswiderständen verfügt. Die Temperatureinheit kann durch ein Ölbad von Bohlin Instrument KTB 30 zwischen Temperaturen von -50°C und -105°C geregelt werden.

### Viskosität

Zur Bestimmung der Viskosität wurde das Rotationsprinzip nach Searle verwendet. Hierbei rotiert der Messkörper während der Messung und der Messbecher steht still, deshalb spricht man bei dieser Bestimmung auch von Rotationviskosimetrie.

Da das Bohlin-Rheometer ein schubspannungsgesteuertes Messgerät ist, wird das Drehmoment aufgebracht und die resultierende Auslenkung gemessen. Drehmoment und Auslenkung werden mit Hilfe der Meßsystemkonstanten, die durch die Verwendung des koaxialen Zylindermeßsystem nach ISO 3219 vorgegeben sind, in rheologischen Daten umgewandelt.

### Beispiel 1 - mit Milch

35,3 Teile Milch mit einem Fettgehalt von 0,3% wurde mit 42,1 Gewichtsteilen Wasser vermischt. 0,6 Gewichtsteile Pektin wurden mit 7 Gewichtsteilen Zucker (Saccharose) vermischt und in die Milchwassermischung eingearbeitet. Anschließend wurde der pH-Wert mit Milchsäure auf 3,95 eingestellt.

Die erhaltene Mischung wurde auf 87°C erhitzt und in einem Heißhalter für 30 sec. bewahrt. Anschließend erfolgte eine Homogenisierung bei 150/30 Bar und eine Abkühlung auf eine Temperatur von etwa 12°C.

Zu dieser Mischung wurde ein Orangengrundstoff (15 Gewichtsteile) kaltaseptisch zudosiert und das Produkt in PET-Flaschen abgefüllt.

Das Produkt zeigte nach 6 Stunden eine deutliche Trennung in eine untere farbige Phase und eine obere milchig/weiße Phase.

Die Trennung konnte durch Zusatz von Betakarotin besser sichtbar gemacht werden.

Durch Schütteln können die Phasen vermischt werden, trennen sich jedoch beim Stehen wieder in zwei Phasen auf.

### Beispiel 2 - mit Magermilchpulver

3,18% Magermilchpulver (Faktor: 11,11) mit einem Fettgehalt von 0,3% wurde mit 74,22% Wasser vermischt. 0,6% Pektin wurden mit 7% Zucker (Saccharose) vermischt und in die Milchwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec. bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere milchig/weiße Farbe.

Durch Schütteln können die Phasen vermischt werden, trennen sich jedoch beim Stehen wieder in zwei Phasen auf.

### Beispiel 3 - mit Süßmolkenkonzentrat

2,89% Süßmolkenkonzentrat (Faktor: 12,2) mit einem Fettgehalt kleiner 0,1% wurde mit 74,51% Wasser vermischt. 0,6% Pektin wurden mit 7% Zucker (Saccharose) vermischt und in die Molkenwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere gelbliche/klare Farbe.

Durch Schütteln können die Phasen vermischt werden, trennen sich jedoch beim Stehen wieder in zwei Phasen auf.

### Beispiel 4 - mit Joghurt

35,3% Joghurt mit einem Fettgehalt von 0,1% wurde mit 42,1% Wasser vermischt. 0,6% Pektin wurden mit 7% Zucker (Saccharose) vermischt und in die Joghurtwassermischung eingearbeitet. Anschließend wurde der pH-Wert mit Milchsäure auf 3,95 eingestellt. Die erhaltene Mischung wurde auf 87°C erhitzt und in einem Heißhalter für 30 sec. bewahrt. Anschließend erfolgte eine Homogenisierung bei 150/30 bar und eine Abkühlung auf eine Temperatur von etwa 12°C. Zu dieser Mischung wurde ein Orangengrundstoff mit 15% kaltaseptisch zudosiert und das Produkt in PET-Flaschen abgefüllt. Das Produkt zeigte nach 6 Stunden eine deutliche Trennung in eine untere farbige Phase und eine obere milchig/weiße Farbe.

Durch Schütteln können die Phasen vermischt werden, trennen sich jedoch beim Stehen wieder in zwei Phasen auf.

## Patentansprüche

1. Verfahren zur Herstellung eines zwei Phasen bildendes Getränkes umfassend die Schritte
- Vermischen von Milch oder Milcherzeugnissen mit einem Fettgehalt von bis zu 1 Gew.-% mit Wasser, einem Verdickungsmittel und Zucker
- Zugabe eines Fruchtgrundstoffes,
wobei das Getränk einen pH-Wert im Bereich von 3,6 bis 4,0 aufweist, sich innerhalb von 24 Stunden bei 6°C in zwei Phasen auftrennt und sich nach Schütteln wieder in zwei Phasen trennt.

2. Verfahren nach Anspruch 1, **dadurch gekennzeichnet, dass** das Verdickungsmittel ausgewählt ist aus Pektine, Kappacarrageen, Carboxymethylcellulose, Gelatine, Guarkernmehl, Carrageene, Stärke und Mischungen davon.

3. Verfahren nach Anspruch 1 oder 2, **dadurch gekennzeichnet, dass** der Anteil an Milcherzeugnissen im Getränk zwischen 20 und 40 Gew.-% liegt.

4. Verfahren nach mindestens einem der Ansprüche 1 bis 3, dadurch-gekennzeichnet, dass der Gehalt an Verdickungsmitteln im Getränk zwischen 0,4 und 0,8 Gew.-% liegt.

5. Verfahren nach mindestens einem der Ansprüche 1 bis 4, **dadurch gekennzeichnet, dass** zusätzlich weitere Hilfsstoffe wie Säuerungsmittel bzw. Säureregulatoren, Aromen, Farbstoffe, Zucker und Wasser zugegeben werden oder im Fruchtgrundstoff enthalten sind.

6. Verfahren nach Anspruch 5, **dadurch gekennzeichnet, dass** der Farbstoff ausgewählt ist aus Beta-Carotin (E160), färbenden Frucht- und Pflanzenextrakten und Mischungen davon.

7. Zweiphasen bildendes Getränk erhältlich durch ein Verfahren nach mindestens einem der Ansprüche 1 bis 6, wobei das Getränk einen pH-Wert im Bereich von 3,6 bis 4,0 aufweist, sich innerhalb von 24 Stunden bei 6°C in zwei Phasen auftrennt und sich nach Schütteln wieder in zwei Phasen trennt.

8. Zweiphasen bildendes Getränk nach Anspruch 7 enthaltend
- 20 bis 40 Gew.-% Milch oder Milcherzeugnis mit einem Fettgehalt bis zu 1 Gew.-%
- Wasser
- Verdickungsmittel
- Fruchtgrundstoff.

## Claims

1. A process for preparing a beverage forming two phases, comprising the steps of
- mixing milk or dairy products having a fat content of up to 1% by weight with water, a thickener and sugar;
- adding a fruit base;
wherein the beverage has a pH value within a range of from 3.6 to 4.0, will separate into two phases at 6 °C within 24 hours, and will separate again into two phases after shaking.

2. The process according to claim 1, **characterized in that** said thickener is selected from pectins, kappa-carrageenan, carboxymethylcellulose, gelatin, guar gum, carrageenans, starch and mixtures thereof.

3. The process according to claim 1 or 2, **characterized in that** the content of dairy products in the beverage is from 20 to 40% by weight.

4. The process according to at least one of claims 1 to 3, **characterized in that** the content of thickeners in the beverage is from 0.4 to 0.8% by weight.

5. The process according to at least one of claims 1 to 4, **characterized in that** additionally further auxiliary agents, such as acidulants or acidity regulators, flavoring agents, colorants, sugars and water, are added, or are contained in the fruit base.

6. The process according to claim 5, **characterized in that** said colorant is selected from beta-carotene (E160), coloring fruit and plant extracts, and mixtures thereof.

7. A beverage forming two phases, obtainable by a process according to at least one of claims 1 to 6, wherein said beverage has a pH value within a range of from 3.6 to 4.0, will separate into two phases at 6°C within 24 hours, and will separate again into two phases after shaking.

8. The beverage forming two phases according to claim 7, containing
- from 20 to 40% by weight of milk or dairy products having a fat content of up to 1% by weight;
- water;
- thickeners;
- a fruit base.

## Revendications

1. Procédé de réalisation d'une boisson formant deux phases, comprenant les étapes suivantes :
- mélangeage de lait ou de produits laitiers, ayant une teneur en matière grasse allant jusqu'à 1 % en poids, avec de l'eau, un agent épaississant et du sucre,
- addition d'un produit de base fruité,
la boisson présentant une valeur de pH dans la plage de 3,6 à 4,0, se séparant en deux phases dans un délai de 24 heures à 6 °C et se séparant de nouveau en deux phases après secouage.

2. Procédé selon la revendication 1, **caractérisé en ce que** l'agent épaississant est sélectionné parmi des pectines, le carraghénane kappa, la carboxyméthyl cellulose, la gélatine, la gomme de guar, des carraghénanes, de l'amidon et des mélanges de ceux-ci.

3. Procédé selon la revendication 1 ou 2, **caractérisé en ce que** la proportion de produits laitiers dans la boisson est comprise entre 20 et 40 % en poids.

4. Procédé selon au moins une des revendications 1 à 3, **caractérisé en ce que** la teneur en agents épaississants dans la boisson est comprise entre 0,4 et 0,8 % en poids.

5. Procédé selon au moins une des revendications 1 à 4, **caractérisé en ce que**, en plus, d'autres substances auxiliaires telles que des agents acidifiants ou respectivement des correcteurs d'acidité, des arômes, des colorants, du sucre et de l'eau, sont ajoutées ou sont contenues dans le produit de base fruité.

6. Procédé selon la revendication 5, **caractérisé en ce que** le colorant est sélectionné parmi le bêta-carotène (E160), des extraits de fruits et de plantes colorants et des mélanges de ceux-ci.

7. Boisson formant deux phases, pouvant être obtenue par un procédé selon au moins une des revendications 1 à 6, la boisson présentant une valeur de pH dans la plage de 3,6 à 4,0, se séparant en deux phases dans un délai de 24 heures à 6 °C et se séparant de nouveau en deux phases après secouage.

8. Boisson formant deux phases selon la revendication 7, contenant
- 20 à 40 % en poids de lait ou de produit laitier ayant une teneur en matière grasse allant jusqu'à 1 % en poids,
- de l'eau
- un agent épaississant
- un produit de base fruité.
